# EUROPEAN PATENT APPLICATION

(11) **EP 4 390 826 A1**
(43) Date of publication of application: **26.06.2024**
(21) Application number: 22887565.4
(22) Date of filing: 25.10.2022
(51) Int. Cl.: G06Q 50/02, G06Q 50/10, H04W 4/30, H04W 4/60, A01G 9/02, A01G 7/00, A01G 7/04, A01G 9/24

(54) **PLANT CULTIVATION DEVICE AND SERVER TRANSMITTING OR RECEIVING PLANT CULTIVATION INFORMATION TO OR FROM SAME**

(30) Priority: 26.10.2021 KR 20210143838
(71) Applicant: LG Electronics Inc., Yeongdeungpo-gu Seoul 07336 (KR)
(72) Inventor: LEE, Soobeom, Seoul 08592 (KR); SHIN, Sangyoun, Seoul 08592 (KR)
(74) Representative: Vossius & Partner Patentanwälte Rechtsanwälte mbB
(86) International application number: PCT/KR2022/016369
(87) International publication number: WO 2023/075369

(57) **Abstract**

The present disclosure relates to a plant cultivator and method for linking plant cultivation between a plurality of plant cultivators, and a mobile terminal device, server, system, and program therefor. For this purpose, the plant cultivator linked to plant cultivation of the present disclosure identifies the detachment of the cultivation port part when the detachable or attachable cultivation port part is detached from the plant cultivator, and obtains the identifier for the detached cultivation port part to transmit it to the mobile terminal device. Therefore, the present disclosure can improve the management convenience of plant cultivation.

## Description

### [Technical Field]

The present disclosure relates to a plant cultivator and method for linking plant cultivation between a plurality of plant cultivators, and a mobile terminal device, server, system, and program therefor.

### [Background Art]

In general, interest in healthy diets is increasing. In addition, in response to this interest, the number of people who cultivate the vegetables they want to eat in places such as gardens or weekend farms is increasing.

Alternatively, the number of people who want to cultivate these vegetables at home is steadily increasing. For these people, indoor plant cultivator that can cultivate plants such as vegetables indoors are being developed.

The prior art (Korean Patent Publication No. 10-2018-0026954) relates to a plant cultivator, a mobile terminal device, and a plant cultivation system equipped with the same, and discloses the content of providing a plant cultivator capable of harvesting at a time desired by the user. However, the plant cultivators of the prior art only disclose the content of cultivating plants through a single plant cultivator, and do not disclose the content of cultivating plants by linking a plurality of plant cultivators with each other.

As such, in the past, as a plurality of plant cultivators did not cultivate plants in conjunction with each other, convenience in plant management was low and there was difficulty in cultivating high-quality plants.

Therefore, there is a need to link and cultivate plants through a plurality of plant cultivators.

### [Disclosure]

### [Technical Problem]

In the past, plant cultivators for cultivating plants did not cultivate plants in conjunction with each other, so user convenience for plant management was low and there were difficulties in cultivating high-quality plants.

Accordingly, the present disclosure is to provide a plant cultivator and method for sharing information related to plant cultivation between a plurality of plant cultivators.

In addition, the present disclosure is to provide a plant cultivator including a cultivation port part that is formed to be attachable or detachable from each of a plurality of plant cultivators.

Additionally, the present disclosure is to provide a mobile terminal device and method for operating plant cultivators in conjunction with each other using an application of the mobile terminal device.

In addition, the present disclosure is to provide a mobile terminal device and method of recognizing the detachment of the cultivation port part of the first plant cultivator and the mounting of the cultivation port part into the second plant cultivator, and then displaying various information about the plants being cultivated in the cultivation port part through an application and controlling functions of a second plant cultivator.

Additionally, the present disclosure provides a server and method that provides various information related to plant cultivation.

The objects of the present disclosure are not limited to the objects mentioned above, and other objects and advantages of the present disclosure that are not mentioned can be understood by the following description and will be more clearly understood by the embodiments of the present disclosure. Additionally, it will be readily apparent that the objects and advantages of the present disclosure can be realized by the means and combinations thereof indicated in the patent claims.

### [Technical Solution]

To achieve this objects, a plant cultivator according to an embodiment of the present disclosure has at least one medium for plant growth, and includes at least one cultivation port part; a main body part in which the cultivation port part is detachably disposed; a sensor configured to recognize identifier information on the cultivation port part and to detect attachment and detachment of the cultivation pot part to and from the main body part; a communication part configured to transmit and receive the identifier information; and a processor electrically connected to the communication part and the sensor; in which the processor is configured to perform, when the cultivation port part is coupled to the main body part, a step of obtaining the identifier information on the cultivation port part through the sensor; and a step of transmitting the obtained identifier information and coupling notification information on the cultivation port part to a mobile terminal device or a server through the communication part.

In addition, the processor may be configured to further perform, before obtaining the identifier information on the cultivation port part, a step of detecting the coupling of the cultivation port part to the main body part using the sensor.

In addition, the plant cultivator may further include a memory configured to store the identifier information on the cultivation port part, in which the processor may be configured to further perform a step of storing the obtained identifier information in the memory.

In addition, the processor may be configured to further perform a step of detecting separation of the cultivation port part from the main body part using the sensor; and, when separation of the cultivation port part from the main body part is detected, a step of transmitting the identifier information and separation notification information on the separated cultivation port part to the mobile terminal device or the server through the communication part.

In addition, the processor may be configured to further perform, after a step of detecting the separation of the cultivation port part, a step of obtaining the identifier information on the separated cultivation port part from the memory.

Meanwhile, a server according to an embodiment of the present disclosure is a server communicatively connected to a first plant cultivator, a second plant cultivator, and a mobile terminal device, includes a communication part configured to transmit and receive information to and from the first plant cultivator, the second plant cultivator, and the mobile terminal device; a memory configured to store the transmitted and received information; and a processor electrically connected to the communication part and the memory, in which the processor is configured to perform a step of receiving information on a cultivation port part coupled to the first plant cultivator from the mobile terminal device or the first plant cultivator through the communication part; and a step of receiving information on a cultivation port part separated from the first plant cultivator and then coupled to the second plant cultivator from the mobile terminal device or the second plant cultivator through the communication part.

In addition, the processor may be configured to further perform, after the step of receiving the information on the cultivation port part from the mobile terminal device or the first plant cultivator, a step of storing the received information on the cultivation port part in the memory; based on the information on the cultivation port part, a step of obtaining cultivation information on plants cultivated in the cultivation port part through the memory or the Internet; and a step of transmitting the obtained information on the plant cultivation to the mobile terminal device or the first plant cultivator through the communication part.

In addition, the information on the cultivation port part may include at least one of the name, type, model name, and identifier of the cultivation port part of the first plant cultivator.

In addition, the cultivation information may include at least one of the name, type, cultivation period, cultivation history of the plant cultivated in the cultivation port part, or information related to the cultivation of the plant.

In addition, the cultivation information may further include connection links to images or videos about management of plants cultivated in the cultivation pot part.

In addition, the server may further include, after a step of receiving the information on the cultivation port part from the mobile terminal device or the second plant cultivator, a step of calling the information on the cultivation port part from the memory; and based on the information on the called cultivation port part, a step of transmitting the cultivation information to the mobile terminal device or the second plant cultivator.

### [Advantageous Effect]

In the present disclosure, a mobile terminal device obtains information about at least one cultivation port part that is attachable or detachable from each of a plurality of plant cultivators, registers it in an application, and transmits it to a server, and the server manages overall plant cultivation for each of the plurality of plant cultivator in the home, so that the management convenience of plant cultivation may be improved.

In addition, the present disclosure allows the mobile terminal device to obtain the identifier of the cultivation port part detached or attached from the plant cultivator, and request and receive cultivation information about the plant cultivated the cultivation port part from the server, so that the user can continuously manage the plant through the mobile terminal device.

In addition, the present disclosure registers at least some of the name, type, cultivation period, cultivation history, for the plant grown in the cultivation port part, and identifier with respect to the cultivation port part in the application of the mobile terminal device, so that the user can manage the plant cultivated remotely through the mobile terminal device.

In addition, the present disclosure allows the server to transmit cultivation information about plants cultivated in the cultivation port part to the mobile terminal device, so that the user can conveniently receive various information for managing the plants being cultivated through the mobile terminal device.

In addition, the present disclosure controls various functions of a plant cultivator equipped with a cultivation port part through an application on a mobile terminal device, so that the user can conveniently manage and cultivate plants remotely.

In addition, the present disclosure sets up a channel for pairing to transmit and receive signals or information between a plurality of plant cultivators, so that each of the plurality of plant cultivators and the mobile terminal device can be linked to each other to conveniently cultivate plants.

In addition, the present disclosure allows the plant cultivator to detect detachment or attachment of the cultivation port part and transmit a detachment notification or attachment notification including an identifier to the mobile terminal device, so that the user can conveniently manage and cultivate plants remotely through the mobile terminal device.

In addition, the present disclosure can obtain information about plants being cultivated in each cultivation port part in the home by receiving information about the cultivation port part from the mobile terminal device.

In addition, in the present disclosure, the server transmits cultivation information about plants cultivated in the cultivation port part to the mobile terminal device, so that users can more easily and conveniently cultivate plants based on information about plants currently being cultivated.

In addition to the above-described effects, specific effects of the present disclosure are described below while explaining specific details for carrying out the disclosure.

### [Description of Drawings]

FIG. 1 is an exemplary diagram illustrating a plant cultivation system in a home according to an embodiment of the present disclosure.
FIG. 2 is a rear perspective view of a plant cultivator according to an embodiment of the present disclosure.
FIG. 3 is a block diagram of a device for controlling linkage of plant cultivation in a plant cultivator according to an embodiment of the present disclosure.
FIG. 4 is a flowchart illustrating the operation of a mobile terminal device that controls linkage of plant cultivation according to an embodiment of the present disclosure.
FIG. 5 is a flowchart illustrating the operation of a server that controls linkage of plant cultivation according to an embodiment of the present disclosure.
FIG. 6 is a flowchart illustrating the process of a system that provides linkage for plant cultivation between a plurality of plant cultivators according to an embodiment of the present disclosure.
FIG. 7 is a first example diagram displaying cultivation information about plants cultivated in a cultivation port part in a mobile terminal device according to an embodiment of the present disclosure.
FIG. 8 is a second example diagram displaying cultivation information about plants cultivated in a cultivation port part in a mobile terminal device according to an embodiment of the present disclosure.
FIG. 9 is a first example diagram illustrating a video about management of plants cultivated in a cultivation pot part on a mobile terminal device according to an embodiment of the present disclosure.

### [Best Mode]

The objects, features, and advantages described above will be described in detail later with reference to the attached drawings, so that those skilled in the art will be able to easily implement the technical idea of the present disclosure. In describing the present disclosure, if it is determined that a detailed description of known technologies related to the present disclosure may unnecessarily obscure the subject matter of the present disclosure, the detailed description will be omitted. Hereinafter, preferred embodiments according to the present disclosure will be described in detail with reference to the attached drawings. In the drawings, identical reference numerals are used to indicate identical or similar components.

Although first, second, or the like is used to describe various components, these components are, of course, not limited by these terms. These terms are only used to distinguish one component from another component, and unless specifically stated to the contrary, the first component may also be a second component.

Hereinafter, the disposition of any component on the "upper portion (or lower portion)" of a component or the "top (or bottom)" of a component may mean that any component is disposed in contact with the upper surface (or lower surface) of the component and other components is interposed between the component and any element disposed on (or under) the component.

Additionally, when a component is described as being "connected," "coupled," or "joined" to another component, it should be understood that the components may be directly connected or joined to each other, but the other component is "interposed" between components, or each component may be "connected," "combined," or "joined" through other components.

Throughout the specification, unless otherwise stated, each component may be singular or plural.

As used herein, singular expressions include plural expressions unless the context clearly dictates otherwise. In the present application, terms such as "consists of" or "comprises" should not be construed as necessarily including all of the various components or steps described in the specification, and should be construed as not including some of the components or steps, or as including additional components or steps.

Throughout the specification, when referred to as "A and/or B", this means A, B or A and B, unless specifically stated to the contrary, and when referred to as "C to D", this means that it is C or higher and D or lower, unless specifically stated to the contrary.

Hereinafter, a plant cultivator and method for linking plant cultivation between a plurality of plant cultivators according to some embodiments of the present disclosure, and a mobile terminal device, server, system, and program therefor will be described.

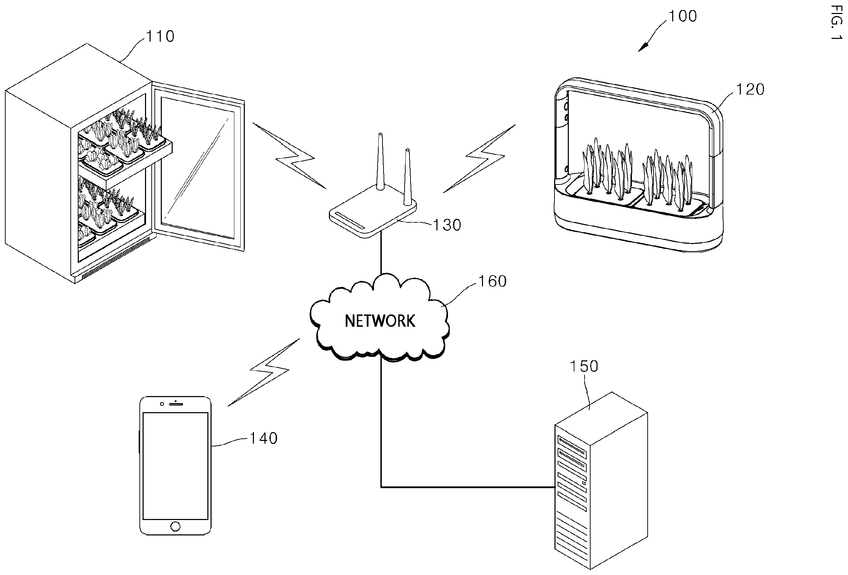

FIG. 1 is an exemplary diagram illustrating a plant cultivation system in a home according to an embodiment of the present disclosure.

Referring to FIG. 1, the plant cultivation system 100 in a home according to an embodiment of the present disclosure may include a first plant cultivator 110 (for example, a closed plant cultivator), a second plant cultivator 120 (for example, simple plant cultivator), a router 130, a mobile terminal device 140, and a server 150.

The plant cultivator in the present disclosure is a plant life appliance that automates most of the complex plant cultivation process so that even beginners with no experience cultivating plants can easily cultivate plants. These plant cultivators are home appliances that automatically cultivate plants by simply placing an integrated seed package (for example, cultivation port part) on the shelf inside and closing the door, and may also include water supply control technology for water purifiers, air conditioning technology for air conditioners, and the wavelength and light source control technology of light emitting devices.

The configuration of the system 100 illustrated in FIG. 1 is according to one embodiment, and the components of the system 100 are not limited to the embodiment illustrated in FIG. 1, and some components may be added, changed or deleted as necessary.

According to one embodiment, the first plant cultivator 110 may be a home appliance device which is disposed in a home and germinates and cultivates plant seeds through the medium 33 of at least one cultivation port part disposed on each shelf to cultivate them into plants. This first plant cultivator 110 may be operated through different algorithms according to the type of plant so that it can cultivate various plants (for example, lettuce, flowers, vegetables, herbs, and the like).

According to one embodiment, the second plant cultivator 120 cultivates plants grown in the first plant cultivator 110, and mobility is guaranteed. The second plant cultivator 120 may include at least one cultivation port part.

When the detachable or attachable cultivation port part is detached or attached, the plant cultivators 110 and 120 may detect the detachment of the cultivation port part and obtain an identifier for the detached cultivation port part. Additionally, the plant cultivators 110 and 120 may transmit a detachment notification including the obtained identifier to the mobile terminal device 140 (or server 150) via the router 130.

In addition, when the communication part does not exist in the plant cultivators 110 and 120, the user can directly input information about the attachment or detachment of the cultivation port part through an application (for example, ThinQ application) on his or her mobile terminal device.

Additionally, the plant cultivators 110 and 120 may include at least one light emitting element, and light emission of the at least one light emitting element may be controlled based on a command received from the mobile terminal device.

According to one embodiment, the router 130 can perform the function of forwarding transmitted and received signals or data between the first plant cultivator 110, the second plant cultivator 120, the mobile terminal device 140, and the server 150 through connection to the network 160.

According to one embodiment, the mobile terminal device 140 may be installed with an application (for example, LG ThinQ application) that performs a function of linking plant cultivation between a plurality of plant cultivators 110 and 120.

According to one embodiment, the mobile terminal device 140 may receive first information about at least one first cultivation port part detachable or attachable from the first plant cultivator (for example, closed plant cultivator 110) from the user through an application. In addition, the mobile terminal device 140 receives second information about at least one second cultivation port part detachable or attachable from the second plant cultivator (for example, simple plant cultivator 120) from the user through an application.

Additionally, the mobile terminal device 140 may transmit the first information and second information registered in the application to the server 150 through the application.

According to one embodiment, the mobile terminal device 140 can receive information about the attachment or detachment of the cultivation port part from the user through the application as a cultivation port part detached from the first plant cultivator (for example, the closed plant cultivator 110) is mounted on the second plant cultivator (for example, the simple plant cultivator 120). For example, the information may include at least some of the identifier of the cultivation port part, the type of plant being cultivated in the cultivation port part, cultivation information, types of the first and second plant cultivators, and model names. Additionally, the mobile terminal device 140 may transmit information input by the user to the server 150.

According to one embodiment, when a notification about detachment or attachment of a cultivation port part is obtained from each of a plurality of plant cultivators, the mobile terminal device 140 may obtain an identifier of the detachable or attachable cultivation port part based on the notification through an application. In addition, based on the obtained identifier, the mobile terminal device 140 may request cultivation information about the plant cultivated in the detachable or attachable cultivation port part to the server 150. Additionally, the mobile terminal device 140 may display cultivation information received from the server 150 based on the request.

According to one embodiment, the mobile terminal device 140 can control pairing between a plurality of plant cultivators and set a channel with each plant cultivator. The mobile terminal device 140 can transmit and receive signals or data between a plurality of plant cultivators through this pairing.

According to one embodiment, the mobile terminal device 140 may transmit commands that control the operation of the function of the plant cultivator (for example, commands that control the light emission of at least one light emitting element provided in the plant cultivator) to a plant cultivator.

In this way, when an input for controlling the brightness of the light emitting element of each of the plurality of plant cultivators is obtained through the application, the mobile terminal device 140 may transmit commands which control the brightness of the at least one light emitting element to the corresponding plant cultivator, based on the obtained input.

According to one embodiment, the mobile terminal device 140 may include components for performing the above-described operations (for example, a communication part (not illustrated), a memory (not illustrated), a display part (not illustrated), and a processor (not illustrated).

According to one embodiment, the server 150 can obtain first information on at least one of the first cultivation port part that is detachable or attachable from the mobile terminal device 140 to the first plant cultivator (for example, the closed plant cultivator 110). In addition, the server 150 may obtain second information about at least one second cultivation port part detachable or attachable from the mobile terminal device 140 to the second plant cultivator (for example, simple plant cultivator 120).

In addition, the server 150 may receive a request for cultivation information about plants cultivated in the cultivated cultivation port part which is attachable or detachable between the first plant cultivator (for example, closed plant cultivator 110) and the second plant cultivator (for example, simple plant cultivator 120) from the mobile terminal device 140. In addition, based on the request, the server 150 may obtain cultivation information about plants cultivated in the detached or attached cultivation port part through memory or the Internet. In addition, the server 150 may transmit the obtained cultivation information to the mobile terminal device 140 or the corresponding plant cultivator.

According to one embodiment, the server 150 may include components (for example, a communication part (not illustrated), a memory (not illustrated), and a processor (not illustrated)) for performing the above-described operations.

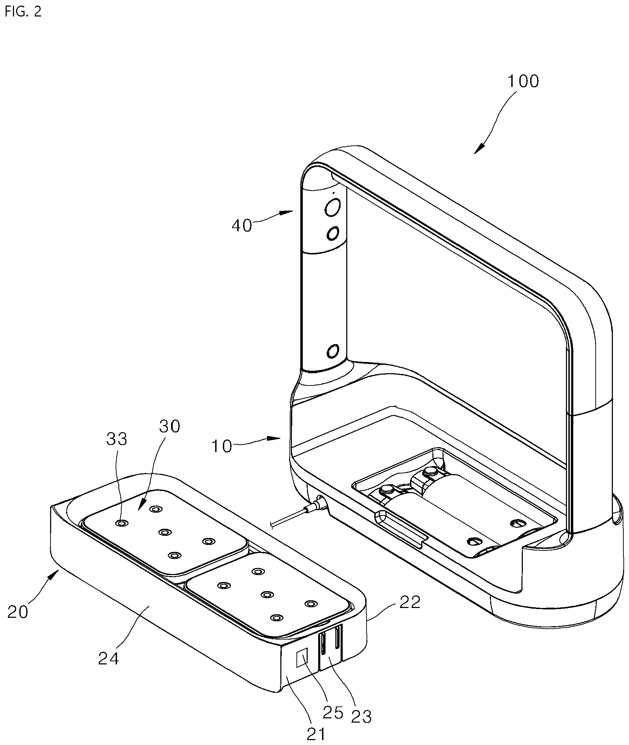

FIG. 2 is a rear perspective view of a plant cultivator according to an embodiment of the present disclosure. Referring to FIG. 2, the plant cultivator 100 according to an embodiment of the present disclosure may include a cultivation port part 30 including at least one medium 33 for plant growth, a water tank port 20 on which the cultivation port part 30 is mounted and which stores the cultivation water to be supplied to the medium 33, a main body part 10 to which the water tank part 20 is detachably coupled, and a handle part 40 which is disposed on the upper side of the main body port 10 and includes a light emitting element.

In addition, the plant cultivator 100 may further include a sensor 25 that detects attachment or detachment of the water tank part 20 from the main body part 10. In addition, the plant cultivator 100 may further include a sensor that detects attachment or detachment between the cultivation port part 30 and the water tank part 20.

For example, the sensor 25 may be placed in a position where it is easy to detect attachment or detachment of the cultivation port part 30 from the plant cultivator 100, and the present disclosure is not limited to the disposition position of the sensor 25.

As described above, the plant cultivator according to the present disclosure may be a closed plant cultivator 110 or an open plant cultivator 120. Additionally, the plant cultivator is portable.

Accordingly, the cultivation pot part 30, where plants are cultivated and grown, is exposed to the indoor environment. For example, the upper surface of the cultivation port part 30 is entirely open and exposed to the indoor environment in consideration of the characteristic of plants having a growth direction that generally grows in an upward direction opposite to the direction of gravity.

Additionally, the cultivation port part 30 may be modularized to be compatible with the above-described closed plant cultivator. For example, the cultivation port part 30 may be modularized to be attachable to or detachable from a closed plant cultivator or a simple plant cultivator.

For example, the cultivation port part 30 according to an embodiment of the present disclosure can germinate seeds and then be mounted on a plant cultivator that can provide a better cultivation environment to grow plants.

In this way, the cultivation port part 30 that is being used in the closed plant cultivator 110 can be moved and placed in the plant cultivator 120 to grow plants.

Meanwhile, the cultivation pot part 30 may be assembled and seated in a non-fastening manner in the water tank part 20, which will be described later.

According to one embodiment, the present disclosure can be applied to the attachment or detachment of the cultivation pot part 30 or the attachment or detachment of the water tank part 20.

Here, the meaning of being assembled to the water tank part 20 in a non-fastening manner means that the cultivation port part 30 can be assembled with the water tank part 20 without having a separate fastening means. In addition, the meaning of being assembled in a non-fastening manner may mean having a structure in which the cultivation port part 30 cannot be moved by its own weight in the assembled and seated state, but can be easily separated and separated without separate disassembly operation.

In this case, the cultivation port part 30 can be supported in the direction of gravity on the water tank part 20, and can be assembled by simply being mounted on the water tank part 20.

Therefore, if the user wants to move the cultivation port part 30 to a closed plant cultivator or separate the cultivation port part 30 from the water tank part 20 to replenish cultivation water, the cultivation pot part 30 can be easily removed simply by lifting the cultivation pot part 30 upward without separate disassembly operation. Accordingly, user convenience may be improved.

In this way, a cultivation pot holding space may be formed between the upper end of the cultivation pot part 30 and the water tank part 20 so that the user can easily hold the cultivation pot part 30 to separate it.

According to one embodiment, the cultivation port part 30 may be provided with at least one medium 33 for supporting the plant and protecting the roots of the plant.

According to one embodiment, the medium 33 may be formed of a predetermined porous material that facilitates the absorption of culture water and is advantageous for plant root growth. Since any configuration known in the art can be applied to the medium 33, description of the detailed configuration will be omitted.

Meanwhile, the drawing illustrates an embodiment in which a total of 10 media 33 are divided into two places and provided in the cultivation port part 30. The number of media 33 may be changed and provided differently according to the size of the cultivation port part 30. The present disclosure is not limited to this, but will be described based on an embodiment in which a total of 10 media 33 are divided into two places and provided in the cultivation pot part 30, as illustrated.

According to an embodiment, the water tank body 21 and the water tank cover 22 may be detachably coupled to each other through a separate fastening means, and for example, the detachment means may be a fastening lever 23 having one end portion which may be rotatably connected to either the water tank body 21 or the water tank cover 22 and the other end portion which may be engaged with either the water tank body 21 or the water tank cover 22.

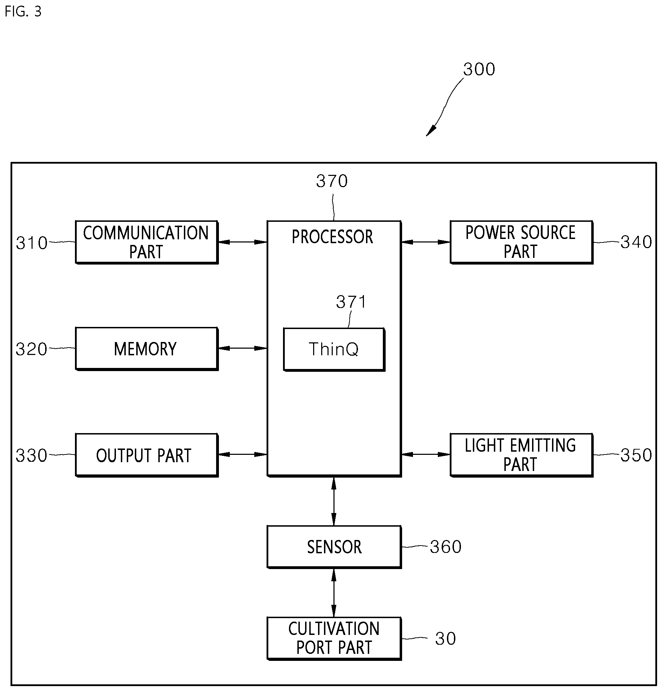

FIG. 3 is a block diagram of a device for controlling linkage of plant cultivation in a plant cultivator according to an embodiment of the present disclosure.

Referring to FIG. 3, the device 300 for controlling linkage of plant cultivation in the plant cultivator according to an embodiment of the present disclosure may include at least one cultivation port part 30, a light emitting part 350, and a communication part 310, a memory 320, an output part 330, a power supply part 340, a sensor 360, and a processor 370. The processor 370 can operate a program (for example, ThinQ (371)) that can manage plant cultivation using artificial intelligence.

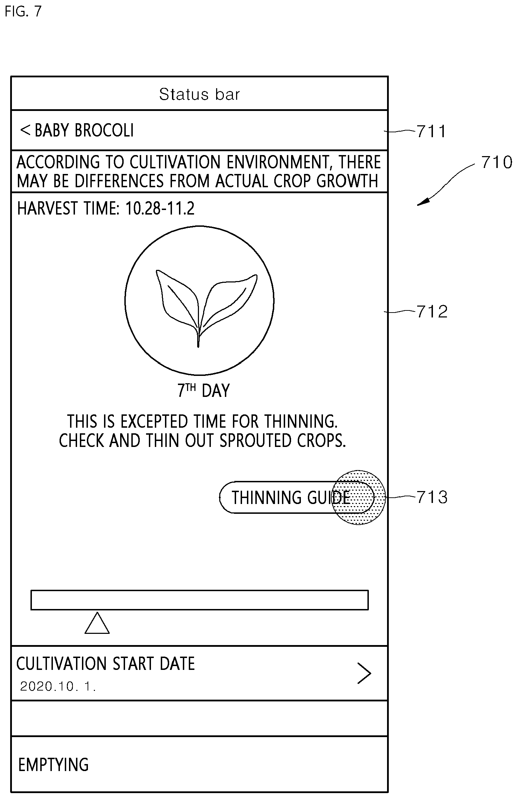

The configuration of the device 300 illustrated in FIG. 7 is according to one embodiment, and the components of the device 300 are not limited to the embodiment illustrated in FIG. 7, and some components may be added, changed, or deleted as needed.

Additionally, the device 300 illustrated in FIG. 7 may be included in each of the plurality of plant cultivators 110 and 120.

According to one embodiment, the cultivation port part 30 may be formed with a plurality of holes through which plants are cultivated and grown. This cultivation pot part 30 is exposed to the indoor environment. In addition, the upper surface of the cultivation port part 30 is entirely open and exposed to the indoor environment in consideration of the characteristic of plants having a growth direction that generally grows in an upward direction opposite to the direction of gravity.

Additionally, the cultivation port part 30 may be modularized to be compatible with other plant cultivators (for example, closed plant cultivators). Additionally, the water tank part 20 may be modularized to be compatible with other plant cultivators (for example, closed plant cultivators).

For example, after germinating seeds in the cultivation port part 30 according to an embodiment of the present disclosure, the cultivation port part is moved to and disposed on another plant cultivator (for example, a closed plant cultivator) that can provide a better cultivation environment to grow plants.

Conversely, the cultivation port part 30 that is being used in another plant cultivator (for example, a closed plant cultivator) may be moved to a plant cultivator (for example, a simple plant cultivator) to grow plants.

According to one embodiment, the light emitting part 350 may include at least one light emitting element (for example, Lighting Emitting Diode (LED)). The at least one light emitting element can emit light in various colors so that the user can recognize an operation state (for example, starting operation, in the middle of an operation, end of operation, or the like) of the plant cultivator (for example, the first plant cultivator 110 or the second plant cultivator 120) or can perform an ON/OFF operation at different cycles.

In addition, at least one light emitting element of the light emitting part 350 may be disposed so as not to reach the cultivation water stored inside the water tank part 20. Additionally, the light emitting part 350 is disposed on the handle part 40 and may be disposed so that light is directed to the cultivation port part 30. The light emitting part 350 may include a light emitting diode chip or a package including a light emitting diode chip that can generate visible light by converting electrical energy into visible light.

According to one embodiment, the communication part 310 may include a module that can perform wireless communication with the mobile terminal device 140 or another plant cultivator through the router 130 and the network 160.

For example, the wireless communication may include various communication methods that can transmit and receive signals wirelessly, such as WiFi, Bluetooth, and beacons. The communication part 310 may include a module (or circuit) capable of performing such wireless communication.

According to one embodiment, the communication part 310 may transmit information about at least one cultivation port part 30 mounted on the plant cultivator, notification information about detachment of the cultivation port part 30 (for example, detachment notification), or notification information about attachment (for example, attachment notification) to the mobile terminal device 140 (or server 150) under the control of the processor 370.

According to one embodiment, the communication part 310 receives commands (for example, commands for signals that control the operation of the plant cultivator) from the mobile terminal device 140, and transmits the received commands to the processor 370.

According to one embodiment, the memory 320 may include volatile memory or non-volatile memory. For example, the memory 320 stores commands that control linkage with other plant cultivators. Alternatively, the memory 320 may include information about control logic for functions that can be performed in the plant cultivator.

Additionally, the memory 320 stores applications (for example, ThinQ applications or programs) and/or commands that allow plant cultivators to operate in conjunction with each other.

According to one embodiment, the output part 330 may include a speaker that outputs a voice signal, a display part that displays various information processed by the plant cultivator, and a light emitting part 350 including at least one light emitting element.

For example, the display part may include a touch screen that can not only output information but also receive commands from the user by touching or hovering.

According to one embodiment, the power supply part 340 may receive power from an external power source and include a battery (not illustrated) that charges the supplied power.

According to one embodiment, the sensor 360 may include at least one sensor that senses data related to the operation and status of the plant cultivator.

Additionally, the sensor 360 may include at least one sensor (for example, a detachment or attachment detection sensor) that detects attachment or detachment of the cultivation port part 30 that is mounted or mountable with the plant cultivator. These sensors 360 may be provided for each cultivation pot.

Additionally, the sensor 360 may transmit the sensed result to the processor 370.

According to one embodiment, the processor 370 may generally control the operation of the plant cultivator. Additionally, the processor 370 can control components of the plant cultivator to perform various data processing and calculations.

Additionally, the processor 370 may generally control the operation of the device 300 of the plant cultivator to link plant cultivation between a plurality of plant cultivators. The processor 370 may be provided in various forms, such as a microcontroller, microcomputer, or microprocessor, as known in the art.

According to one embodiment, the processor 370 can further exchange information with the above-described closed plant cultivator and other plant cultivators through a Wi-Fi module (or Bluetooth module). Information about plants growing in each closed plant cultivator and other plant cultivators may be exchanged with each other.

Here, information about the plant may include the species name of the plant, the number of days the plant grows, the time the light remains on, and the like.

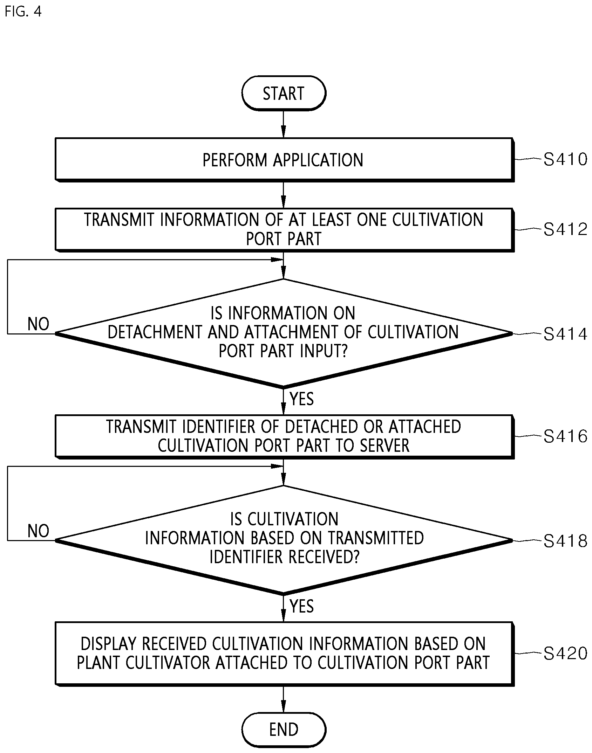

FIG. 4 is a flowchart illustrating the operation of a mobile terminal device that controls linkage of plant cultivation according to an embodiment of the present disclosure.

Hereinafter, with reference to FIG. 4, the operation of the mobile terminal device that controls linkage of plant cultivation according to an embodiment of the present disclosure will be described in detail as follows.

According to one embodiment, the mobile terminal device 140 can execute an application (S410). The mobile terminal device 140 (for example, processor) may execute an application (for example, ThinQ application) that controls plant cultivation linkage between plant cultivators and display the application on the display part.

According to one embodiment, the mobile terminal device 140 may transmit information on at least one cultivation port part to the server (S412). The mobile terminal device 140 (for example, processor) may transmit information about at least one cultivation port part disposed on the shelf of the first plant cultivator 110 (for example, closed plant cultivator) to the server 150.

For example, the information may include at least some of the name, type, cultivation time, cultivation history, and identifier for the cultivation port part of the plant cultivated in the cultivation port part of the first plant cultivator 110 (for example, a closed plant cultivator).

According to one embodiment, the mobile terminal device 140 can identify whether information on detachment and attachment of the cultivation port part is is received (S414). The mobile terminal device 140 can receive information about detachment and attachment of the cultivation port part from the user through an application.

For example, when the cultivation port part is detached from the shelf of the first plant cultivator 110 (for example, a closed plant cultivator) and attached to the second plant cultivator 120 (for example, a simple plant cultivator), the user can input information about detachment and attachment of the cultivation port part through the application of the mobile terminal device 140.

For example, the information may include the name, type, and model name of the first plant cultivation device 110 (for example, a closed plant cultivation device) and/or the second plant cultivation device 120 (for example, a simple plant cultivation device), the identifier of the cultivation port part, the type and name, and cultivation history information of the plant cultivated in the cultivation port part.

According to one embodiment, the mobile terminal device 140 may transmit the identifier of the detachable or attachable cultivation port part to the server (S416). For example, the mobile terminal device 140 may transmit the identifier of the cultivation port part which is detached from the first plant cultivator 110 (for example, a closed plant cultivator) and thus attached to the second plant cultivator 120 (for example, a simple plant cultivator) to the server 150.

According to one embodiment, the mobile terminal device 140 may identify whether cultivation information is received based on the transmitted identifier (S418). The mobile terminal device 140 can identify whether cultivation information about plants cultivated in the cultivation port part corresponding to the information input in the above process (S414).

The cultivation information may include at least some of the name, type, cultivation period, cultivation history, and information related to the cultivation of the plant cultivated in the detachable or attachable cultivation port part.

According to one embodiment, the mobile terminal device 140 may display the received cultivation information based on the plant cultivator to which the cultivation port part is attached (S420). For example, the mobile terminal device 140 may include cultivation information about the cultivation port part which is detached from the first plant cultivator 110 (for example, a closed plant cultivator) and then attached to the second plant cultivator 120 (for example, a simple plant cultivator) on a screen including cultivation information on the second plant cultivator, and then may display.

For example, the application installed on the mobile terminal device 140 can display cultivation information about plants by managing different tabs for each plant cultivator. Each tab displays cultivation information about the plant being cultivated in one plant cultivator, and as the cultivation port part is attached or detached, the cultivation information on the corresponding cultivation port part is displayed in another tab.

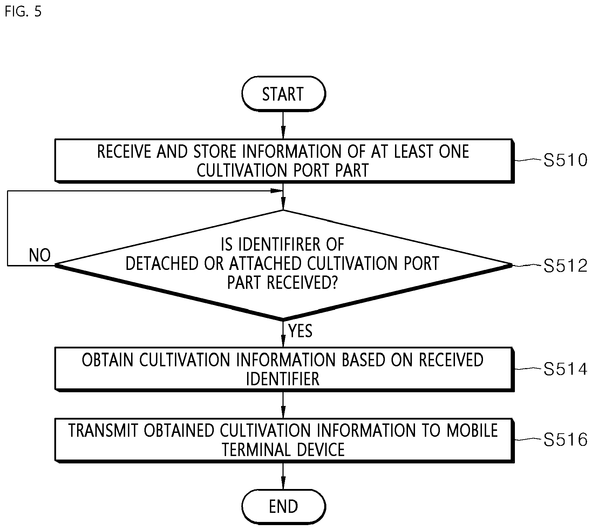

FIG. 5 is a flowchart illustrating the operation of a server that controls linkage of plant cultivation according to an embodiment of the present disclosure.

Hereinafter, with reference to FIG. 5, the operation of the server that controls linkage of plant cultivation according to an embodiment of the present disclosure will be described in detail as follows.

According to one embodiment, the server 150 may receive and store information on at least one cultivation port part (S510). The server 150 (for example, processor) may receive and store in the memory information (e.g. identifier) on the at least one cultivation port part mounted on the at least one plant cultivator from each of at least one plant cultivator (for example, closed plant cultivator 110 and simple plant cultivator 120).

The server 150 may classify and store in memory the identifier for each of the plurality of cultivation port parts for each plant cultivator, the type of plant to be cultivated, the start time of cultivation, cultivation history information, and cultivation-related information.

According to one embodiment, the server 150 may determine whether the identifier of the detachable or attachable cultivation port part is received (S512). For example, the server 150 (for example, processor) is detached from the first plant cultivator 110 (for example, a closed plant cultivator) and thus may receive information about the cultivation port part attached to the second plant cultivator 120 (for example, a simple plant cultivator).

The information may include at least some of the name, type, cultivation period, cultivation history, and identifier of the plant cultivated in the detachable or attachable cultivation pot part.

According to one embodiment, the server 150 may obtain cultivation information based on the received identifier (S514). The server 150 (for example, processor) may obtain cultivation information based on the obtained identifier from memory (not illustrated), or may obtain various information related to plants cultivated in the corresponding cultivation port part through the Internet.

The cultivation information may include at least some of the name, type, cultivation period, cultivation history, and information related to the cultivation of the plant cultivated in the cultivation port part. In addition, the server 150 (for example, processor) can obtain various information about the management of the plant through memory or the Internet through information about the name of the plant cultivated in the cultivation port part, the time when the seed was planted, or the like.

The cultivation information may further include a link to an image or video about management of plants cultivated in the cultivation pot part.

According to one embodiment, the server 150 may transmit the obtained cultivation information to the mobile terminal device (S516). The server 150 (for example, processor) may transmit cultivation information that allows the user to properly manage and grow plants cultivated in the detached or attached cultivation port part to the mobile terminal device 140.

Alternatively, the server 150 (for example, processor) may directly transmit cultivation information to the corresponding plant cultivator.

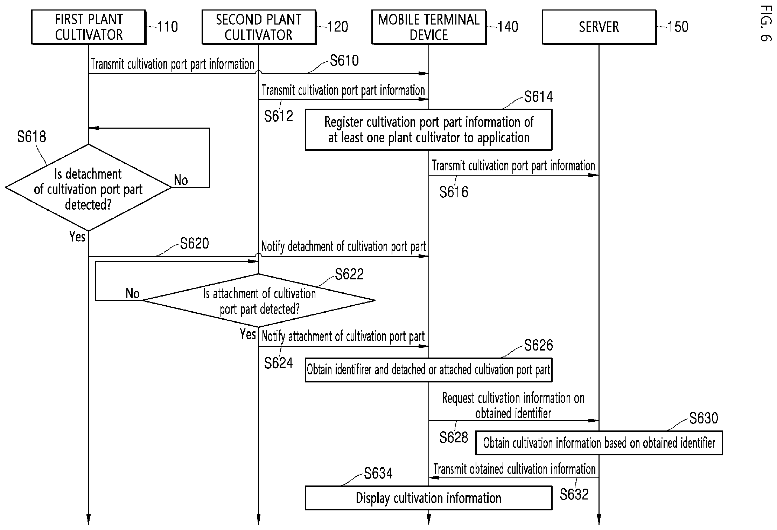

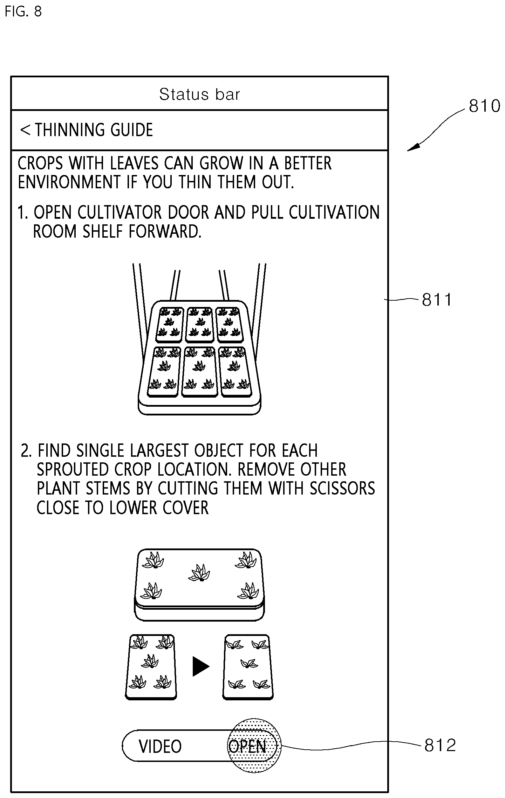

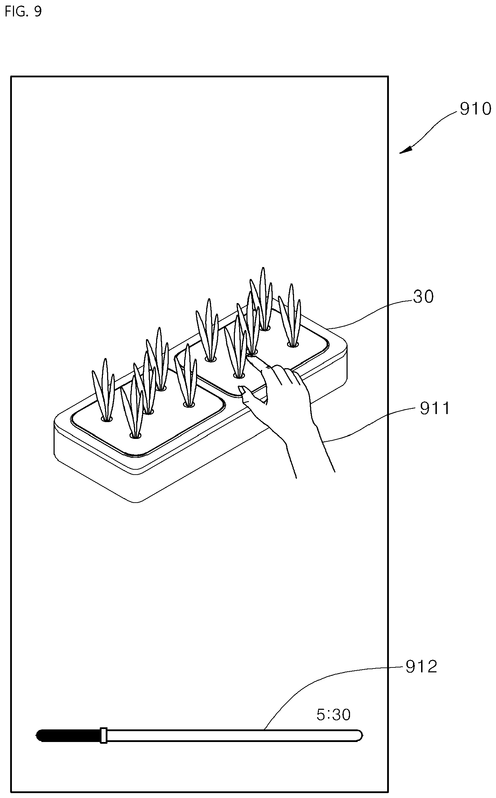

FIG. 6 is a flowchart illustrating the process of a system that provides linkage for plant cultivation between a plurality of plant cultivators according to an embodiment of the present disclosure. FIG. 7 is a first example diagram displaying cultivation information about plants cultivated in a cultivation port part in a mobile terminal device according to an embodiment of the present disclosure. FIG. 8 is a second example diagram displaying cultivation information about plants cultivated in a cultivation port part in a mobile terminal device according to an embodiment of the present disclosure. FIG. 9 is a first example diagram illustrating a video about management of plants cultivated in a cultivation pot part on a mobile terminal device according to an embodiment of the present disclosure.

Hereinafter, with reference to FIGS. 3 and 6 to 9, the process of a system that provides linkage for plant cultivation between a plurality of plant cultivators according to an embodiment of the present disclosure will be described in detail as follows.

According to one embodiment, the first plant cultivator 110 (for example, a closed plant cultivator) may transmit information about the cultivation port part to the mobile terminal device 140 (for example, ThinQ application) (S610). The first plant cultivator 110 (for example, a closed plant cultivator) may obtain information about at least one cultivation port part disposed on each shelf from a memory, and transmit the obtained information to the mobile terminal device 140 (or the server 150).

For example, the information may include at least some of the name, type, cultivation time, cultivation history, and identifier for the cultivation port part of the plant cultivated in the cultivation port part of the first plant cultivator 110 (for example, a closed plant cultivator).

According to one embodiment, the second plant cultivator 120 (for example, a simple plant cultivator) may transmit information about the cultivation port part to the mobile terminal device 140 (for example, ThinQ application) (S612). The second plant cultivator 120 (for example, simple plant cultivator) may obtain information about at least one cultivation port part disposed on each shelf from memory and transmit the obtained information to the mobile terminal device 140 (or the server 150).

For example, the information may include at least some of the name, type, cultivation period, cultivation history, and identifier for the cultivation port part of the plant cultivated in the cultivation port part of the second plant cultivator 110 (for example, closed plant cultivator).

According to one embodiment, the mobile terminal device 140 (for example, processor) may register information about the cultivation port part of at least one plant cultivator in the application (S614). The mobile terminal device 140 (for example, processor) may register information in the corresponding cultivation port part in an application (for example, ThinQ application) based on information received from each plant cultivator.

According to one embodiment, the mobile terminal device 140 (for example, processor) may transmit information about the cultivation port part to the server 150 (S616). The mobile terminal device 140 (for example, processor) may transmit information about at least one cultivation port part of each plant cultivator to the server 150.

According to one embodiment, the first plant cultivator 110 (for example, a closed plant cultivator) may detect whether at least one cultivation port part is detached (S618). When the detachable or attachable cultivation port part (for example, a closed plant cultivator) is detached, the first plant cultivator 110 may identify the detachment of the cultivation port part through the sensor 360. This sensor 360 is disposed at a position where the cultivation port part 30 is coupled to the first plant cultivator 110 and can detect detachment or attachment of the cultivation port part 30.

According to one embodiment, the first plant cultivator 110 (for example, a closed plant cultivator) may notify the mobile terminal device 140 of the detachment of the cultivation port part (S620). The first plant cultivator 110 (for example, a closed plant cultivator) may obtain an identifier for the detached cultivation port part from the memory 320 and transmit a detachment notification including the obtained identifier to the mobile terminal device 140.

According to one embodiment, the second plant cultivator 120 (for example, a simple plant cultivator) may detect whether at least one cultivation port part is detached (S622). When the detachable or attachable cultivation port part (for example, a simple plant cultivator) is detached, the second plant cultivator 120 may identify the detachment of the cultivation port part through the sensor 360. This sensor 360 is disposed at a location where the cultivation port part 30 is coupled to the second plant cultivator 120 and can detect detachment or attachment of the cultivation port part 30.

According to one embodiment, the second plant cultivator 120 (for example, a simple plant cultivator) may notify the mobile terminal device 140 of the detachment of the cultivation port part (S624). The second plant cultivator 120 (for example, simple plant cultivator) may obtain an identifier for the detached cultivation port part from the memory 320 and transmit a detachment notification including the obtained identifier to the mobile terminal device 140.

According to one embodiment, the mobile terminal device 140 (for example, processor) may obtain the identifier of the detachable and attached cultivation port part (S626). The mobile terminal device 140 (for example, processor) is detached from the first plant cultivator 110, based on the information registered in the process (S614) and then may identify the attached cultivation port part attached to the second plant cultivator 120.

According to one embodiment, the mobile terminal device 140 (for example, processor) may request cultivation information for the obtained identifier from the server 150 (S628). The mobile terminal device 140 (for example, processor) may request cultivation information about the plant being cultivated in the cultivation port corresponding to the obtained identifier from the server 150.

Alternatively, the mobile terminal device 140 (for example, processor) may obtain cultivation information (for example, name, type, cultivation period, cultivation history of plant, or the like) about the plant being cultivated in the cultivation port part corresponding to the obtained identifier from memory (or application).

According to one embodiment, the server 150 (for example, processor) may obtain cultivation information based on the obtained identifier (S630). The server 150 (for example, processor) may obtain cultivation information based on the obtained identifier from memory (not illustrated), or may obtain various information related to plants cultivated in the corresponding cultivation port part through the Internet.

For example, the cultivation information may include at least some of the name, type, cultivation period, cultivation history, and information related to the cultivation of the plant cultivated in the cultivation port part.

For example, the server 150 (for example, processor) may obtain various information about the management of the plant through memory or the Internet through information about the name of the plant cultivated in the cultivation port part, the time when the seed was planted, or the like.

Alternatively, the cultivation information may further include a link to an image or video about management of plants cultivated in the cultivation pot part.

According to one embodiment, the server 150 (for example, processor) may transmit the obtained cultivation information to the mobile terminal device (S632). The server 150 (for example, processor) may transmit cultivation information that allows the user to properly manage and grow plants cultivated in the cultivation port part to the mobile terminal device 140. Alternatively, the server 150 (for example, processor) may directly transmit cultivation information to the corresponding plant cultivator.

According to one embodiment, the mobile terminal device 140 (for example, processor) may display cultivation information (S634). The mobile terminal device 140 (for example, processor) may display cultivation information received from the server 150 through an application (for example, Thin Q application).

For example, the mobile terminal device 140 (for example, processor) may display cultivation information (for example, name, type, cultivation time, cultivation history, and some information related to cultivation of plant) about the plant cultivated in the detachable or attachable cultivation port part in the above processes (S618, S620, S622, S624) through an application (for example, Thin Q application).

Referring to FIG. 7, the mobile terminal device 140 may display screen 810 containing cultivation information received from the server 150 through an application.

According to one embodiment, the screen 710 may include a menu 713 for displaying the name of the plant cultivated in the cultivation pot part (711), information on plant management (712), and detailed information on management (for example, thinning). For example, information 712 about plant management may include various information about plant management, such as type, cultivation period, and cultivation history of plant.

For example, when the menu 713 in FIG. 7 is selected, the application of the mobile terminal device 140 may display the screen 810 in FIG. 8.

Referring to FIG. 8, the screen 810 may include detailed information regarding management (for example, thinning).

For example, the screen 810 may include information about the thinning guide (for example, a guide for removing weeds, slow-growing plants present in the cultivation pot or the like), at least one image related to the guide, and a link to video for guide 812.

For example, when the user selects the link 812 on the screen 810, the mobile terminal device 140 can download the corresponding video through the application.

Referring to FIG. 9, the application can play a video 910 about the guide. The video 910 is a video illustrating the process of directly removing weeds and slow-growing plants present in the cultivation pot part 30 using the hand 911, and may include information 912 about the playback time.

In this way, in order to link plant cultivation between a plurality of plant cultivators according to the present disclosure, the mobile terminal device 140 is detached from the first plant cultivator 110 and then may display a guide to the plants being cultivated in the cultivation port part 30 attached to the second plant cultivator 120 on the application.

In addition, the second plant cultivator 120 may manage the plants being cultivated in the cultivation port part 30 based on cultivation information.

Each step in each flowchart described above may be operated regardless of the order illustrated, or may be performed simultaneously. Additionally, at least one component of the present disclosure and at least one operation performed by the at least one component may be implemented in hardware and/or software.

As described above, it is obvious that the present disclosure has been described with reference to the illustrative drawings, but the present disclosure is not limited to the embodiments and drawings disclosed herein, and various modifications may be made by those skilled in the art within the scope of the technical idea of the present disclosure. In addition, although the operational effects according to the configuration of the present disclosure were not explicitly described and explained while explaining the embodiments of the present disclosure above, it is natural that the predictable effects due to the configuration should also be recognized.

## Claims

1. A plant cultivator comprising:
a cultivation port part;
a main body part in which the cultivation port part is detachably disposed;
a sensor configured to recognize identifier information on the cultivation port part and to detect attachment and detachment of the cultivation pot part to and from the main body part;
a communication part configured to transmit and receive the identifier information; and
a processor electrically connected to the communication part and the sensor;
wherein the processor is configured to perform:
when the cultivation port part is coupled to the main body part, a step of obtaining the identifier information on the cultivation port part through the sensor; and
a step of transmitting the obtained identifier information and coupling notification information on the cultivation port part to a mobile terminal device or a server through the communication part.

2. The plant cultivator of claim 1,
wherein the processor is configured to further perform:
before obtaining the identifier information on the cultivation port part, a step of detecting the coupling of the cultivation port part to the main body part using the sensor.

3. The plant cultivator of claim 1, further comprising:
a memory configured to store the identifier information on the cultivation port part,
wherein the processor is configured to further perform:
a step of storing the obtained identifier information in the memory.

4. The plant cultivator of claim 3,
wherein the processor is configured to further perform:
a step of detecting separation of the cultivation port part from the main body part using the sensor; and
when separation of the cultivation port part from the main body part is detected, a step of transmitting the identifier information and separation notification information on the separated cultivation port part to the mobile terminal device or the server through the communication part.

5. The plant cultivator of claim 4,
wherein the processor is configured to further perform:
after a step of detecting the separation of the cultivation port part, a step of obtaining the identifier information on the separated cultivation port part from the memory.

6. A server communicatively connected to a first plant cultivator, a second plant cultivator, and a mobile terminal device, comprising:
a communication part configured to transmit and receive information to and from the first plant cultivator, the second plant cultivator, and a mobile terminal device;
a memory configured to store the transmitted and received information; and
a processor electrically connected to the communication part and the memory,
wherein the processor is configured to perform:
a step of receiving information on a cultivation port part coupled to the first plant cultivator from the mobile terminal device or the first plant cultivator through the communication part; and
a step of receiving information on a cultivation port part separated from the first plant cultivator and then coupled to the second plant cultivator from the mobile terminal device or the second plant cultivator through the communication part.

7. The server of claim 6,
wherein the processor is configured to further perform:
after the step of receiving the information on the cultivation port part from the mobile terminal device or the first plant cultivator, a step of storing the received information on the cultivation port part in the memory;
based on the information on the cultivation port part, a step of obtaining cultivation information on plants cultivated in the cultivation port part through the memory or the Internet; and
a step of transmitting the obtained information on the plant cultivation to the mobile terminal device or the first plant cultivator through the communication part.

8. The server of claim 7,
wherein the information on the cultivation port part includes at least one of the name, type, model name, and identifier of the cultivation port part of the first plant cultivator.

9. The server of claim 7,
wherein the cultivation information includes at least one of the name, type, cultivation period, cultivation history of the plant cultivated in the cultivation port part, or information related to the cultivation of the plant.

10. The server of claim 9,
wherein the cultivation information further comprising:
connection links to images or videos about management of plants cultivated in the cultivation pot part.

11. The server of claim 7, further comprising:
after a step of receiving the information on the cultivation port part from the mobile terminal device or the second plant cultivator, a step of calling the information on the cultivation port part from the memory; and
based on the information on the called cultivation port part, a step of transmitting the cultivation information to the mobile terminal device or the second plant cultivator.
